# EUROPÄISCHE PATENTANMELDUNG

(11) **EP 2 412 854 A1**
(43) Veröffentlichungstag der Anmeldung: **01.02.2012**
(21) Anmeldenummer: 11168200.1
(22) Anmeldetag: 31.05.2011
(51) Int. Cl.: D04B 21/08, B60C 27/18

(54) **Textile Gleitschutzvorrichtung mit Traktionsfaden in Maschenbindung**

(30) Priorität: 29.07.2010 DE 102010032627
(71) Anmelder: RUD Ketten Rieger & Dietz GmbH u. Co. KG, 73432 Aalen (DE)
(72) Erfinder: Rieger, Johannes Werner, 73447 Oberkochen (DE); Kaiser, Helmut, 73457 Aalen-Essingen (DE)
(74) Vertreter: Grünecker, Kinkeldey, Stockmair & Schwanhäusser

(57) **Zusammenfassung**

Die Erfindung betrifft eine Gleitschutzvorrichtung (1), die auf einen Autoreifen (2) montiert werden kann. Die Gleitschutzvorrichtung weist eine Lauffläche (4) aus textilem Material auf. Das textile Material umfasst wenigstens ein textiles Grundmaterial (28) und wenigstens einen Traktionsfaden (32). Die Steifigkeit des Traktionsfadens (32) ist gegenüber dem textilen Grundmaterial (28) erhöht. Die Verschleißfestigkeit der Gleitschutzvorrichtung (1) und deren Traktionseigenschaften gegenüber den bekannten textilen Gleitschutzvorrichtungen zu verbessern, ist erfindungsgemäß vorgesehen, dass der wenigstens eine Traktionsfaden (32) in Umfangsrichtung (16) verlaufend mit dem textilen Grundmaterial (28) verwirkt und/oder verstrickt ist. Insbesondere kann der Traktionsfaden (32) an einer Außenseite (38) der Lauffläche (4) eine frei liegende Traktionsmasche (39) bilden.

## Beschreibung

Die Erfindung betrifft eine auf einen Autoreifen montierbare Gleitschutzvorrichtung, mit einer wenigstens abschnittsweise aus textilem Material gefertigten Lauffläche, wobei das textile Material wenigstens ein textiles Grundmaterial und wenigstens einen Traktionsfaden umfasst, dessen Steifigkeit gegenüber dem textilen Grundmaterial erhöht ist.

Textile Gleitschutzvorrichtungen zeichnen sich durch eine besonders einfache Montage und ein geringes Stauvolumen aus. Das textile Grundmaterial liegt im montierten Zustand auf der Lauffläche auf und erhöht die Traktion auf eisigen Oberflächen. Oftmals wird ein abriebfestes Polyamid-Gewebe als Grundmaterial verwendet. Der Nachteil der textilen Gleitschutzvorrichtungen liegt in der geringen Verschleißfestigkeit des textilen Grundmaterials, so dass die Laufleistung begrenzt ist. Die Traktionseigenschaften textiler Gleitschutzvorrichtungen sind ferner vor allem auf Schnee nicht so gut wie die von Schneeketten, so dass die textilen Gleitschutzvorrichtungen oft nur als Anfahrhilfen dienen.

Gleitschutzvorrichtungen mit einer Lauffläche aus textilem Material sind aus einer Reihe von Patentveröffentlichungen, wie beispielsweise der WO 2006/129147 A1, der WO 2008/120884 A1 und der EP 1 980 423 A2, bekannt.

Eine Weiterentwicklung dieser textilen Gleitschutzvorrichtung ist beispielsweise in der EP 2 022 653 A1 beschrieben. Einzelne Trägerkettfäden des gewebten textilen Grundmaterials sind von einem Umwindefilament umwickelt. Durch das gegenüber den Kett- und Schussfäden des Gewebes deutlich kleinere Umwindefilament erhöht sich die Traktion auf Eis gegenüber Geweben ohne solche als Umwindegarn ausgestalteten Kettfäden, wie nachstehend kurz erläutert ist.

Aus dem nächstkommenden Stand der Technik, der DE 10 2008 040 7071 A1, ist ebenfalls die Verwendung eines Traktionsfadens aus Umwindegarn bekannt. Das Umwindegarn besitzt eine Seele aus polymerem Monofilament, die von einem Umwindefaden aus Edelstahldraht umwickelt ist. Durch die höhere Steifigkeit des Traktionsfadens presst sich dieser in harte Oberflächen, wie beispielsweise Eis, und erhöht die Traktion. Der Traktionsfaden ist in Abschnitte des Grundmaterials als Schussfaden eingewebt. Trotz der bereits guten Standzeiten und Traktionseigenschaften dieser Lösung ist eine weitere Verbesserung wünschenswert.

Die EP 1 888 353 B1 zeigt eine Gleitschutzvorrichtung mit einer Lauffläche aus Maschenware. Die Traktion soll durch eine im Wesentlichen quer zur Rollrichtung verlaufende Rippstruktur verbessert werden.

Weitere Gleitschutzvorrichtungen, die ein textiles Grundmaterial verwenden, sind beispielsweise aus der EP 2 006 127, der EP 2 133 221 A1, der FR 2 912 686 A1, der WO 2007/006022 und der US 2010/0018620 bekannt. Die in diesen Patentveröffentlichungen dargestellten Gleitschutzvorrichtungen sind zum Teil recht kompliziert aufgebaut.

Ferner zeigt die Patentschrift DD 81 343 A einen Reifengleitschutz aus einem Netz raupenwabenartiger Maschenstruktur, die sich von der vorliegenden Erfindung schon dadurch unterscheidet, dass sie mit Kautschuk oder Ähnlichem beschichtet ist.

Der Erfindung liegt die Aufgabe zugrunde, eine Gleitschutzvorrichtung mit den eingangs genannten Merkmalen so zu verbessern, dass sie bei einfacher Handhabbarkeit hohe Traktionswerte auf Schnee und Eis und eine hohe Verschleißfestigkeit aufweist.

Diese Aufgabe wird für die eingangs genannte Gleitschutzvorrichtung erfindungsgemäß dadurch gelöst, dass der wenigstens eine Traktionsfaden im Wesentlichen in Umfangsrichtung verlaufend mit dem Grundmaterial verwirkt und/oder verstrickt ist.

Diese erstaunlich einfache Lösung bietet bei hoher Verschleißfestigkeit eine verbesserte Traktion, die dadurch entsteht, dass der Traktionsfaden aufgrund der gewirkten und/oder gestrickten gegenüber dem textilen Grundmaterial beweglicher als bei der bekannten gewebten Verbindung ist. Ein eingewebter Traktionsfaden ist dagegen sehr straff in das Grundmaterial eingebunden und kann sich daher schlechter in den Untergrund drücken. Die gewirkte und/oder gestrickte Verbindung sichert zudem einen gebrochenen oder gerissenen Traktionsfaden besser im Grundmaterial als dies bei einem eingewebten Traktionsfaden der Fall ist. Die Orientierung des Traktionsfadens in Umfangsrichtung führt zu einer verbesserten Übertragung der Antriebskräfte in der Lauffläche und aufgrund einer Erhöhung der Steifigkeit der Lauffläche in Umfangsrichtung im Betrieb zu einem besseren Überwandern der Gleitschutzvorrichtung über den Autoreifen.

Zudem kann eine erfindungsgemäße Gleitschutzvorrichtung ohne jegliche Beschichtung, bzw. unter dem Verzicht auf eine Beschichtung, zufriedenstellende Festigkeits-, Lebensdauer- und Traktionseigenschaften aufweisen.

Die erfindungsgemäße Lösung kann durch weitere, jeweils für sich betrachtet vorteilhafte Weiterentwicklungen verbessert werden. Diese Weiterentwicklungen sind im Folgenden beschrieben und können beliebig miteinander kombiniert sein.

So ist es von Vorteil, wenn das textile Grundmaterial, das auf der Lauffläche des Autoreifens zu liegen kommt, aus einem Material mit Maschenbindung gefertigt, beispielsweise gewirkt oder gewebt ist. Durch diese Maßnahme lässt sich die Traktion der Lauffläche gegenüber einem gewebten Grundmaterial nochmals erhöhen. Die erhöhte Traktion scheint darauf zu beruhen, dass die Maschenbindung zu einer dehnbareren und flexibleren Lauffläche führt, die sich leichter als eine gewebte Lauffläche in die Profilrillen des Autoreifens drückt. So können die Traktionseigenschaften des Reifenprofils besser ausgenutzt werden als bei einem weniger flexiblen Gewebe. Außerdem führt die erhöhte Dehnbarkeit und Flexibilität des gewirkten und/oder gestrickten Grundmaterials zu einer verbesserten Selbstreinigung der Lauffläche. Schließlich weist ein gewirktes oder gestricktes Grundmaterial eine stärker strukturierte Oberfläche als ein gewebtes Material auf, was ebenfalls der Traktion zugute kommt.

Von Vorteil ist es ferner, wenn das Grundmaterial in Umfangsrichtung weniger leicht dehnbar ist als quer zur Umfangsrichtung. Diese Ausgestaltung sichert eine geringere Nachgiebigkeit gegenüber den an der Gleitschutzvorrichtung im Betrieb in Umfangsrichtung angreifenden Traktionskräften. Gleichzeitig kann die Breite der Lauffläche an unterschiedliche Reifenformen angepasst werden. Außerdem ist es ausreichend, wenn das Grundmaterial aufgrund seiner Dehnbarkeit quer zur Umfangsrichtung in die Profilrillen eingedrückt wird.

In einer weiteren vorteilhaften Ausgestaltung der Erfindung bildet der wenigstens eine Traktionsfaden wenigstens eine außen auf der Lauffläche liegende Traktionsmasche aus. Bei dieser Ausgestaltung liegt der Traktionsfaden außen an der Lauffläche frei. Die Traktionsmasche bildet bevorzugt eine vorspringende Struktur. Dies und die schlingenähnliche Form der Traktionsmasche wirken sich positiv auf das Traktionsverhalten aus. Es wird pro Lauffläche eine geringere Länge des Traktionsfadens benötigt als bei einem eingewebten Traktionsfaden. Da der Traktionsfaden teuer ist, können so ohne Abstriche in der Traktion Kosten gespart werden.

In einer weiteren vorteilhaften Ausgestaltung kann die Traktionsmasche auf einer Außenfläche der Lauffläche vorzugsweise lose aufliegen. Das lose Aufliegen stellt eine erhöhte Beweglichkeit der Traktionsmasche gegenüber dem Grundmaterial sicher, so dass sie sich aufgrund der in der Lauffläche wirkenden Traktionskräfte verformen und aufstellen kann. Hierbei ist eine lose Anbindung der Traktionsmasche an das Grundmaterial ausreichend, in der sich die Traktionsmasche mit dem Fingernagel gegenüber dem Grundmaterial um geringe Beträge, beispielsweise einen Fadendurchmesser bewegen lässt. Dies lässt sich alternativ oder zusätzlich auch dadurch erreichen, dass der an der Außenfläche der Lauffläche frei liegende Abschnitt der Traktionsmasche gekrümmt ist. Durch die Verformbarkeit der Krümmung entsteht eine verbesserte Beweglichkeit der Traktionsmasche.

Die wenigstens eine Traktionsmasche kann sich, bei einem Grundmaterial mit Maschenbindung, über wenigstens eine, vorzugsweise mehrere, Maschenweiten oder, bei einem gewebten Grundmaterial, über mehrere Schuss- und/oder Kettfäden erstrecken. Die Traktionsmasche ist somit größer als die durchschnittliche Strukturgröße des Grundmaterials. Sie liegt dadurch über eine größere Länge frei auf der Außenfläche und bildet somit eine griffigere Struktur zur Traktionserhöhung. Für die Lauffläche wird weniger Traktionsfaden benötigt als bei eingewebtem Traktionsfaden. Die Traktionsmasche liegt vorzugsweise auf erhabenen bzw. vorspringenden Bereichen der Außenfläche auf, so dass sie von diesen Bereichen in einen weichen Untergrund gedrückt wird.

Gemäß einer weiteren Ausgestaltung kann die wenigstens eine Traktionsmasche geneigt oder quer zur Umfangsrichtung der Lauffläche orientiert sein. Die in Richtung quer zur Lauffläche orientierte Komponente der Maschenrichtung ist im Wesentlichen verantwortlich für die Traktion. Die Richtung der Traktionsmasche bestimmt sich vorzugsweise nach der Richtung der Verbindungslinie durch die Bindungsstellen, an denen die Maschenschenkel mit dem Grundmaterial verbunden sind.

Die Gleitschutzvorrichtung kann in einer weiteren vorteilhaften Ausgestaltung eine Vielzahl von in Umfangsrichtung hintereinander angeordneten außen frei liegenden Traktionsmaschen des wenigstens einen Traktionsfadens aufweisen. Insbesondere können die Traktionsmaschen und/oder der in Umfangsrichtung verlaufende Traktionsfaden an der Außenseite der Lauffläche eine in Umfangsrichtung verlaufende, erhabene Struktur ausbilden. Eine solche Struktur erhöht die Spurtreue der Gleitschutzvorrichtung beim Abrollen, insbesondere wenn durch die Anordnung der Traktionsmasche ein im Wesentlichen durchgängiger Spurring aus erhabenen Traktionsmaschen entsteht. Selbstverständlich können auf der Lauffläche auch mehrere parallele Spurringe ausgebildet sein. Die einzelnen Traktionsmaschen eines Spurringes können, wie oben erwähnt, gegen die Umfangsrichtung geneigt sein, quer zur Umfangsrichtung verlaufen, oder in abwechselnder Orientierung beispielsweise im Zickzack verlaufen.

Für die in Umfangsrichtung hintereinander angeordneten Traktionsmaschen können eine oder mehrere Traktionsfäden, die über eine Maschenbindung mit dem Grundmaterial verbunden sind, verwendet werden. Die Traktionsfäden können im Wesentlichen parallel zueinander orientiert sein. Je mehr Traktionsfäden für die hintereinander angeordneten Traktionsmaschen eingesetzt werden, umso verschleißfester wird die Gleitschutzvorrichtung, da bei einem Bruch oder Riss eines Traktionsfadens die übrigen Traktionsfäden unversehrt bleiben.

Der wenigstens eine Traktionsfaden kann wenigstens ein Metallfilament aufweisen, das eine hohe Verschleißfestigkeit und ein gutes Eindringverhalten auch in harte Oberflächen, wie Eis, aufweist. Das Metallfilament kann um ein Monofilament aus einem Kunststoff gewickelt sein.

Von Vorteil ist es ferner, wenn das Grundmaterial in Umfangsrichtung weniger leicht dehnbar ist als quer zur Umfangsrichtung. Diese Ausgestaltung sichert eine geringere Nachgiebigkeit gegenüber dem an der Gleitschutzvorrichtung im Betrieb in Umfangsrichtung angreifenden Traktionskräften. Gleichzeitig kann die Breite der Lauffläche besser an unterschiedliche Reifenformen angepasst werden. Schließlich kann das Grundmaterial in die Profilrillen eingedrückt werden, so dass das Reifenprofil als Traktionshilfe mitgenutzt werden kann. Diese Vorteile können auf einfache Weise erreicht werden, wenn das Grundmaterial in den Bereichen zwischen einzelnen Traktionsfäden oder Spurringen geschmeidig und flexibel ist. Hierzu kann das Grundmaterial in diesen Bereichen im Wesentlichen frei von Traktionsfäden sein.

Im Folgenden ist die Erfindung beispielhaft anhand einer Ausführungsform mit Bezug auf die beigefügte Zeichnungen erläutert. Die in den Ausführungsformen dargestellten Merkmale können dabei nach Maßgabe der obigen Ausführungen weggelassen oder modifiziert werden, wenn es auf dem mit einem bestimmten Merkmal verbundenen Vorteil nicht ankommt.

Es zeigen:
- Fig. 1: eine schematische Perspektivansicht einer erfindungsgemäßen Gleitschutzvorrichtung;
- Fig. 2: ein Detail A der Fig. 1;
- Fig. 3: eine schematische Ansicht auf eine Außenfläche des Details A;
- Fig. 4: eine schematische Ansicht auf eine Innenfläche des Details A.

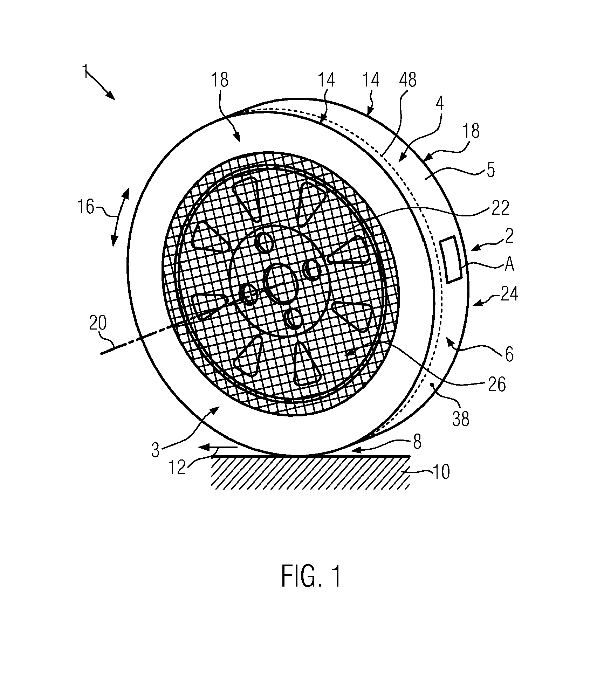

Zunächst wird der Aufbau einer erfindungsgemäßen Gleitschutzvorrichtung 1 mit Bezug auf die Fig. 1 beschrieben. Fig. 1 zeigt die Gleitschutzvorrichtung in der Gebrauchsstellung, in der sie auf einem Autoreifen 2 montiert ist, mit Blick auf eine vom nicht dargestellten Fahrzeug abgewandte Außenseite 3 des Autoreifens 2.

Die Gleitschutzvorrichtung 1 weist eine textile Lauffläche 4 auf. Die Lauffläche setzt sich beispielsweise aus Multifilamenten zusammen, die aus natürlichen oder synthetischen Fasern und/oder Filamenten, oder Kombinationen hiervon, bestehen. Die Lauffläche ist bevorzugt gewirkt und/oder gestrickt.

Die Lauffläche 4 der Gleitschutzvorrichtung 1 liegt in der Gebrauchsstellung auf einer Lauffläche 6 des Autoreifens 2 auf. Im Bereich einer Reifenaufstandsfläche 8, in der die Gleitschutzvorrichtung 1 zwischen dem Autoreifen 2 und einem Untergrund 10 liegt, wirken Traktionskräfte 12, die das mit dem Autoreifen 2 verbundene, in Fig. 1 nicht dargestellte Fahrzeug antreiben.

Damit die Gleitschutzvorrichtung 1 beim Abrollen des Autoreifens 2 auf dem Untergrund 10 insbesondere bei Kurvenfahrten nicht abfällt, erstreckt sie sich über beide Reifenschultern 14, die an den beiden quer zur Umfangsrichtung 16 gelegenen Rändern der Lauffläche 6 gelegen sind, und über die sich daran anschließenden Reifenflanken 18 radial nach innen in Richtung einer Reifenachse 20.

An der Außenseite 3 kann die Gleitschutzvorrichtung 1 durch einen scheibenförmigen Abschnitt 22 aus einem Textilmaterial oder textilähnlichem Material, oder alternativ durch wenigstens einen Gurt, gegen Abschälen in Richtung einer Innenseite 24 des Autoreifens gesichert sein. Der Abschnitt 24 erstreckt sich parallel zur äußeren Reifenflanke 18 über eine Felge 26 und die Reifenachse 20.

An der Innenseite 26 kann an der inneren Reifenflanke 18 ein elastisches Spannseil (in Fig. 1 nicht dargestellt) die Gleitschutzvorrichtung zur Reifenachse 20 hin spannen und gegen Abschälen in Richtung der Außenseite sichern.

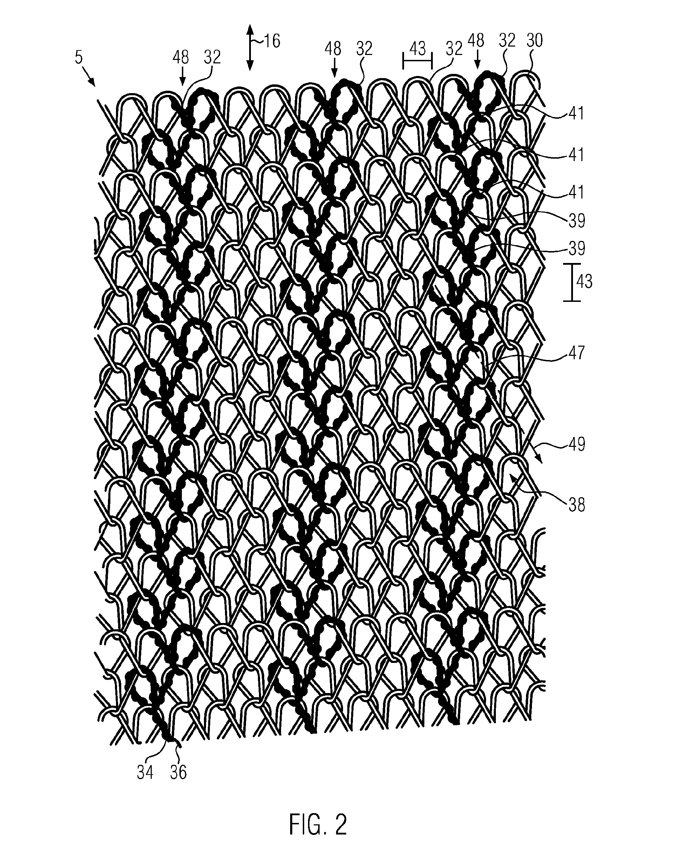

Der Aufbau der Lauffläche 4 der Gleitschutzvorrichtung 1 ist mit Bezug auf die Fig. 2 bis 4 erläutert. Dabei werden der Einfachheit halber die Bezugszeichen der Fig. 1 weiter verwendet.

Die Lauffläche 4 ist aus einem textilen Material mit Maschenbindung gefertigt. Bei einer solchen Maschenbindung sind im Fadensystem der Lauffläche 4 Fadenschlingen 30 ineinander geschlungen und nicht, wie bei einem Gewebe, zwei über Kreuz stehende Fadensysteme miteinander verwoben. Die Maschenbindung führt im Vergleich zu einem Gewebe zu einem flexibleren und dehnbareren Grundmaterial 28 mit einer erhabenen Oberfläche.

Lediglich beispielhaft ist in Fig. 2 ein gewirktes Grundmaterial 28 in Trikotlegung gezeigt. Selbstverständlich können auch andere Maschenformen zum Einsatz kommen.

Die Lauffläche 4 weist wenigstens einen Traktionsfaden 32, vorzugsweise jedoch eine Mehrzahl von Traktionsfäden 32 auf, die eine höhere Steifigkeit als das textile Grundmaterial aufweisen. Der Traktionsfaden 32 kann ein Umwindegarn sein, bei dem eine Seele 34, beispielsweise in Form eines Monofilaments, von einem verschleißbeständigen Umschlingfaden 36 schraubenförmig umwickelt ist. Der Umschlingfaden 36 kann ein Monofilament aus einem festen Kunststoff oder ein Metalldraht, beispielsweise ein Edelstahldraht, sein.

Der Traktionsfaden 32 ist, unabhängig vom Aufbau des Grundmaterials als Web-, Wirk-und/oder Strickware, mit dem Grundmaterial 28 über eine Maschenbindung, insbesondere über eine gewirkte und/oder gestrickte Verbindung verbunden. Er bildet bevorzugt eine an einer Außenfläche 38 der Lauffläche 4 frei liegende Traktionsmasche 39. Ein frei liegender Maschenkopf 40 der Traktionsmasche 39 ist im Wesentlichen frei von Bindungsstellen. Die Bindungsstellen 41 der Traktionsmasche 39, mit der diese mit dem Grund- oder Trägermaterial verbunden ist, liegen vorzugsweise im Bereich der Maschenschenkel 42. Daraus resultiert eine Beweglichkeit des Maschenkopfes 40 gegenüber dem Grundmaterial 28. Der Beweglichkeit zugute kommt auch die gekrümmte, auslenkbare Form des frei liegenden Maschenkopfes 40.

Die Traktionsmasche 39 erstreckt sich vorteilhaft über wenigstens einen, bevorzugt wenigstens zwei Maschenabstände 43 bzw., falls als Grundmaterial 28 ein Gewebe zum Einsatz kommt, wenigstens einen, bevorzugt wenigstens zwei Ketten- oder Schussfadenabstand. Damit liegt die Traktionsmasche 39 auf der Oberflächenstruktur 46 des Grundmaterials 28 auf, so dass sie einen vorspringenden Abschnitt 44 bildet, der sich stärker in einen weichen Untergrund eindrückt.

In Umfangsrichtung 16 sind bevorzugt mehrere Traktionsmaschen 39 hintereinander angeordnet. Die einzelnen Traktionsmaschen können dabei gegenüber der Umfangsrichtung leicht geneigt bis quer verlaufen, so dass die Traktionsmaschen 39 eine größere Länge für den Angriff der Traktionskräfte 12 bereitstellen. Die Richtung der Traktionsmasche 39 kann sich, wie Fig. 2, aus einer Verbindungslinie 47 ableiten, welche die Bindungsstellen 44 der Traktionsmasche 39 eine mit dem Grundmaterial 28 verbindet. Die Richtung der Verbindungslinie 47 weicht vorzugsweise höchstens ± 30° von der Umfangsrichtung ab.

Die in Umfangsrichtung hintereinander angeordneten Traktionsmaschen 39 können zusammen wenigstens einen durchgängigen, erhabenen Spurring 48 bilden, der den Geradeauslauf stabilisiert. Es können mehrere Spurringe 48 nebeneinander auf der Lauffläche angeordnet sein. Wie Fig. 2 zeigt, können aufeinanderfolgende Traktionsmaschen eine jeweils bezüglich der Umfangsrichtung 16 entgegengesetzte Neigungsrichtung 49 aufweisen, so dass sich entlang eines Spurringes 48 ein Zickzackmuster ergibt. Ein solches Zickzackmuster ermöglicht einen schmalen Spurring 48, der dennoch insgesamt eine große Gesamtlänge von quer zur Umfangsrichtung 16 verlaufenden Traktionsfäden aufweist.

Das Grundmaterial 28 ist bevorzugt in Umfangsrichtung 16 weniger nachgiebig als in Richtung quer zur Umfangsrichtung, so dass es die Traktionskräfte 12 besser aufnimmt, gleichzeitig aber in Profilrillen (nicht dargestellt) des Autoreifens eingedrückt werden kann. Dadurch kann die Oberflächenstruktur des Reifens insbesondere bei weichem Untergrund wie Schnee zur Traktionserhöhung mitgenutzt werden. Nachdem der in die Profilrillen eingedrückte Teil der Lauffläche 4 aus der Reifenaufstandsfläche 8 (Fig. 1) rollt, wird er durch die Traktionskräfte 12 wieder straff gezogen, so dass sich die Lauffläche selbst reinigt. Die Straffheit der Lauffläche in Umfangsrichtung wird durch den wenigstens einen Traktionsfaden 32 bzw. durch mehrere im Wesentlichen parallel zueinander orientierte Traktionsfäden 32 sichergestellt.

Die Dehnbarkeit und Geschmeidigkeit des Grundmaterials 28 quer zur Umfangsrichtung erleichtert außerdem die Anschmiegung des Materials an die Reifenschultern, was den Verschleiß in diesem Bereich verringert.

Die wenigstens eine Traktionsmasche 39 liegt vorzugsweise lose auf dem Grundmaterial auf, kann also beispielsweise mit einem Fingernagel gegenüber dem Grundmaterial verschoben werden. Diese Nachgiebigkeit stellt sicher, dass der Traktionsfaden der Walkbewegung des Autoreifens beim Durchlaufen der Reifenaufstandsfläche 8 folgen und sich bei weichem Untergrund aufgrund der in der Reifenaufstandsfläche wirkenden Kraft aufstellen kann. Ferner kann sich der Traktionsfaden unterschiedlichen Oberflächen im Bereich der Reifenaufstandsfläche 8 und den mit diesen Oberflächen einhergehenden unterschiedlichen Reibbeiwerten besser einpassen.

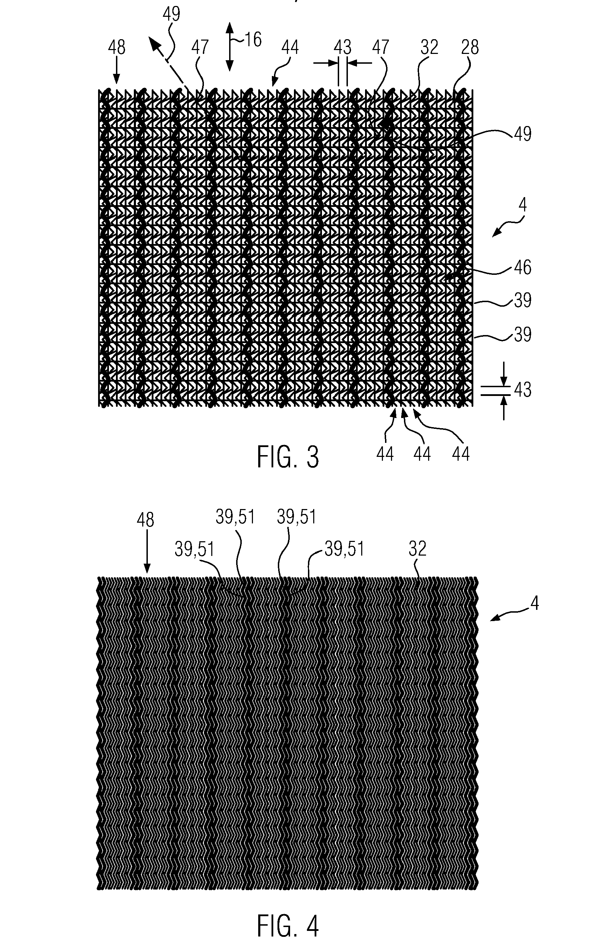

Schließlich kann der Traktionsfaden 32 vorzugsweise senkrecht durch die Lauffläche 4 hindurch gewebt und/oder gewirkt sein, so dass auf der Innenseite 50 der Lauffläche (Fig. 4) ebenfalls Maschen 51 des Traktionsfadens 32 freiliegen und als Traktionsmaschen 39 genutzt werden können. Diese Ausgestaltung ermöglicht es, die Gleitschutzvorrichtung 1 zu wenden. Die Maschen an der Innenseite der Lauffläche 4 können dabei anders ausgestaltet sein als die Traktionsmaschen 30, so dass die Innen- und die Außenseite der Lauffläche 4 bei unterschiedlichen Untergründen 10 zum Einsatz kommen.

Da der Traktionsfaden 32 teuer ist, kann das Grundmaterial außerhalb der Spurringe 48 frei von Traktionsfäden sein. Die Verwendung des Traktionsfadens kann sich auf die Spurringe 48 beschränken. Neben günstigeren Herstellkosten bleibt die Lauffläche bei dieser Ausge-staltung geschmeidig, da die steifen Traktionsfäden nur in den recht schmalen Spurringen angeordnet sind.

### Bezugszeichenliste

- 1: Gleitschutzvorrichtung
- 2: Autoreifen
- 3: Außenseite des Autoreifens
- 4: Lauffläche der Gleitschutzvorrichtung
- 5: Textiles Material der Lauffläche
- 6: Lauffläche des Autoreifens
- 8: Reifenaufstandsfläche
- 10: Untergrund
- 12: Traktionskräfte
- 14: Reifenschultern
- 16: Umfangsrichtung
- 18: Reifenflanken
- 20: Reifenachse
- 22: Abschnitt
- 24: Innenseite
- 26: Felge
- 28: Grundmaterial
- 30: Fadenschlinge
- 32: Traktionsfaden
- 34: Seele
- 36: Umschlingfaden
- 38: Außenfläche von 4
- 39: Traktionsmasche
- 40: Maschenkopf
- 41: Bindungsstellen
- 42: Maschenschenkel
- 43: Maschenabstände
- 44: vorspringender Abschnitt des Grundmaterials
- 46: Oberflächenstruktur des Grundmaterials auf der Außenseite
- 47: Verbindungslinie zwischen Bindungsstellen einer Masche
- 48: Spurring
- 49: Neigungsrichtung der Masche
- 50: Innenfläche

## Patentansprüche

1. Auf einen Autoreifen (2) montierbare Gleitschutzvorrichtung (1) mit einer wenigstens abschnittsweise aus textilem Material gefertigten Lauffläche (4), wobei das textile Material wenigstens ein textiles Grundmaterial (28) und wenigstens einen Traktionsfaden (32) umfasst, dessen Steifigkeit gegenüber dem textilen Grundmaterial erhöht ist, **dadurch gekennzeichnet, dass** der wenigstens eine Traktionsfaden (32) im Wesentlichen in Umfangsrichtung (16) verlaufend mit dem Grundmaterial (28) verwirkt und/oder verstrickt ist.

2. Gleitschutzvorrichtung (1) nach Anspruch 1, **dadurch gekennzeichnet, dass** das textile Grundmaterial (28) aus einem Material mit Maschenbindung im Wesentlichen ohne Traktionsfaden (32) gefertigt ist.

3. Gleitschutzvorrichtung (1) nach Anspruch 1 oder 2, **dadurch gekennzeichnet, dass** der wenigstens eine Traktionsfaden wenigstens eine auf einer Außenfläche (38) der Lauffläche (4) aufliegende Traktionsmasche (39) ausbildet.

4. Gleitschutzvorrichtung (1) nach Anspruch 3, **dadurch gekennzeichnet, dass** die Traktionsmasche (39) im Wesentlichen beweglich auf der Außenfläche (38) aufliegt.

5. Gleitschutzvorrichtung (1) nach Anspruch 2 und 3 oder 4, **dadurch gekennzeichnet, dass** die Traktionsmasche (39) des wenigstens eines Traktionsfadens (32) sich über mehrere Maschenweiten (42) des Grundmaterials (28) orientiert ist.

6. Gleitschutzvorrichtung (1) nach einem der Ansprüche 3 bis 5, **dadurch gekennzeichnet, dass** die Traktionsmasche (39) sich geneigt zu einer Umfangsrichtung (16) der Lauffläche (4) erstreckt.

7. Gleitschutzvorrichtung (1) nach einem der Ansprüche 1 bis 5, **dadurch gekennzeichnet, dass** der wenigstens eine Traktionsfaden (32) eine in Umfangrichtung (16) sich erstreckende erhabene Struktur (44) der Lauffläche (4) bildet.

8. Gleitschutzvorrichtung (1) nach einem der Ansprüche 3 bis 7, **dadurch gekennzeichnet, dass** eine Mehrzahl von Traktionsmaschen (39) in Umfangsrichtung (16) hintereinander angeordnet sind.

9. Gleitschutzvorrichtung (1) nach einem der Ansprüche 3 bis 8, **dadurch gekennzeichnet, dass** die in Umfangsrichtung (16) aufeinanderfolgenden Traktionsmaschen (39) einen im Wesentlichen durchgängigen Spurring (48) bilden.

10. Gleitschutzvorrichtung (1) nach einem der Ansprüche 3 bis 9, **dadurch gekennzeichnet, dass** in Umfangsrichtung (16) aufeinanderfolgende Traktionsmaschen (39) vorgesehen sind, deren Neigung gegen die Umfangsrichtung (16) unterschiedlich ist.

11. Gleitschutzvorrichtung (1) nach Anspruch 10, **dadurch gekennzeichnet, dass** aufeinanderfolgende Traktionsmaschen (39) im Zickzack angeordnet sind.

12. Gleitschutzvorrichtung (1) nach einem der Ansprüche 1 bis 11, **dadurch gekennzeichnet, dass** das Grundmaterial (28) in Umfangsrichtung (16) weniger nachgiebig ist als quer zur Umfangsrichtung (16).

13. Gleitschutzvorrichtung (1) nach einem der Ansprüche 1 bis 12, **dadurch gekennzeichnet, dass** der wenigstens eine Traktionsfaden (32) wenigstens ein Metallfilament (36) umfasst.

14. Gleitschutzvorrichtung (1) nach Anspruch 13, **dadurch gekennzeichnet, dass** das Metallfilament (36) um ein Monofilament (34) gewickelt ist.
